# EUROPEAN PATENT APPLICATION

(11) **EP 1 239 650 A1**
(43) Date of publication of application: **11.09.2002**
(21) Application number: 01105888.0
(22) Date of filing: 09.03.2001
(51) Int. Cl.: H04M 1/2745

(54) **Phone book intelligent dialing method**

(71) Applicant: Inventec Appliances Corp., Wugu Shiang, Taipei (TW)
(72) Inventor: Lai, Cheng-Shin, c/o Inventec Appliances Corp., Wugu Shiang, Taipei (TW); Fan, Xiao-Long, Nanjing (CH); Gu, Ping, Nanjing (CH)
(74) Representative: TER MEER STEINMEISTER & PARTNER GbR

(57) **Abstract**

A phone book intelligent dialing method used in mobile phones. The method uses a country code table and area code table to analyze the phone number entered so that the phone number is a complete one, containing the country code and the area code, when being stored to the phone book. By defining related symbol tags for identification in the phone book (such as the country codes, area codes, pager numbers, and usual phone numbers), the data type of the phone number to be dialed can be analyzed to determine the exact phone number. Since the user does not need to manually enter the country codes, extension numbers, or pager numbers using the disclose method, the present invention is simple and does not make mistakes.

## Description

### BACKGROUND OF THE INVENTION

### Field of Invention

The present invention pertains to a phone book intelligent dialing method and, in particular, to an intelligent dialing method for the phone books in mobile phones that does not require manual dialing.

### Related Art

Along with the progress in communications network technologies, mobile phones (or cellular phones) have become one of the most popular communication tools. In general, mobile phones use a standard keypad defined by Consultation Committee for International Telegraph and Telephone (CCITT). As the volumes of mobile phones become smaller, their keypad areas are also smaller. It is thus very inconvenient to manually enter a long series of phone number digits. In particular, gentlemen with bigger fingers would often press wrong buttons due to the smallness of the keypads. To solve the inconvenience and to consider the phone number storage, most mobile phones on the market provide the function of a phone book. One can look for and select the phone number he wants to dial from the phone book using a movable highlight bar. Once a phone number is selected, the user can press a confirmation key to complete the dial. To some extent, the above method solves the inconvenience of entering the correct phone number on a small keypad and the user does not need to memorize too many phone numbers.

In addition, there is another dialing method which utilizes a buffer in the mobile phone to store the phone numbers already dialed according to the order they have been dialed. This then provides the user a redial function so that the user can select one from the listed phone numbers and dial out. This method is particularly convenient for users who need to call the same numbers repeatedly. Since this method lists the phone numbers according to the temporal order they have been dialed, the most recent one will be listed in front of all others. If the user wants to redial, he only needs to open the phone memory and will see that the highlight bar stay on the first record (the most recent one). The user only needs to press the confirmation key directly in order to call out, without the need to search it in the phone book again.

Nevertheless, the above-mentioned conventional dialing method is still imperfect. Taking the redial function as an example, usual mobile phones provide very few memory-redial phone numbers. Furthermore, either using the phone book or the redial function to dial a number, there is a common problem. That is, the user has to manually enter the country code and the area code even when automatically dialing the phone numbers stored in the phone book. In fact, this is a mixed dialing which has not been implemented in current mobile phones. Moreover, conventional mobile phones do not have the functions of automatically dialing extension numbers or pager numbers.

### SUMMARY OF THE INVENTION

In view of the foregoing, it is an object of the present invention to provide an intelligent dialing method that is free from manual dialing and can automatically respond to all possible situations in the dialing procedure so as to help the user to quickly and efficiently dial a phone number.

Pursuant to the above object, the disclosed phone book intelligent dialing method first analyzes whether a received phone number contains a country code and an area code. If not, the destination country code and area code are obtained by referring to a country code table and an area code table and are added to the original phone number. When the user selects a number in the phone book and calls out, the system reads in a local country code and area code of the place where the mobile phone is registered when being turned on. The system then analyzes the data type of the phone number and compares the destination country code and area code with the corresponding local country code and area code. The dialing content is then determined according to the data type of the phone number and the comparison result. Since a user does not need to manually enter country codes, area codes, extension numbers, and pager numbers when using the disclosed method to make phone calls, the present invention indeed provides a simple method that is not likely to make mistakes.

### BRIEF DESCRIPTION OF THE DRAWINGS

The present invention will become more fully understood from the detailed description given hereinbelow illustration only, and thus are not limitative of the present invention, and wherein:
FIG. 1 is a schematic view of processing received phone signals according to the present invention; and
FIG. 2 is a schematic view of the intelligent dialing method of the invention.

### DETAILED DESCRIPTION OF THE INVENTION

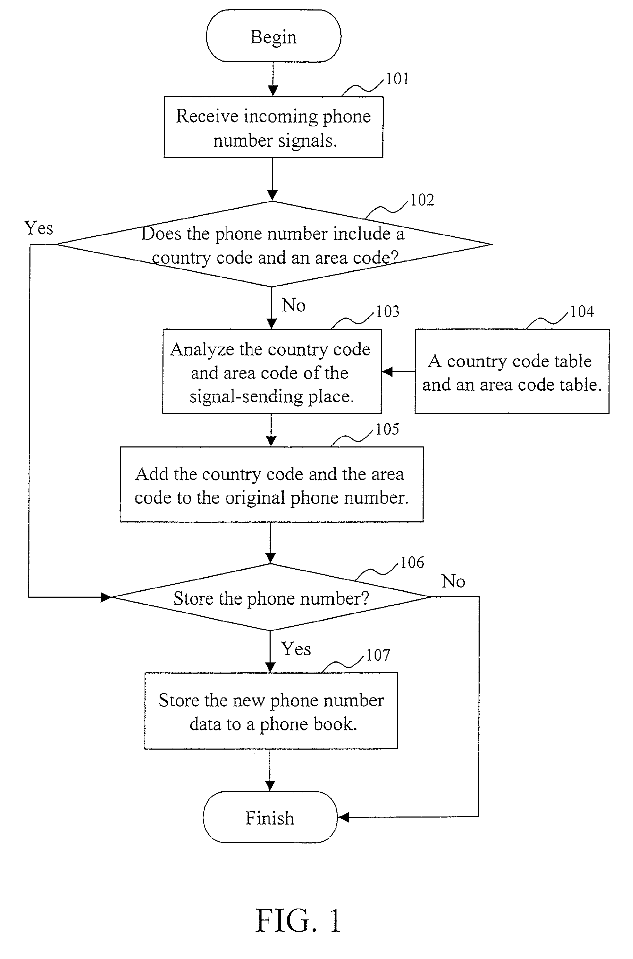

When there are some mixed types of phone number dialing, *e*.*g*., adding extension numbers, country codes, or pager numbers of an auto station form, the user has to manually enter the additional numbers to a mobile phone and cannot use the phone book or redial function directly. To take into account the above possibilities, the phone book of the mobile phone disclosed herein has a function of determining country codes and area codes. With reference to FIG. 1, when the mobile phone receives a phone call (step 101), the received signals are analyzed to see if a country code and an area code are already included (step 102). If they are included, then the system prompts to the user to determine whether the phone number should be stored (step 106). If the user wants to save the phone number, it will be stored in the phone book by the system (step 107). Otherwise, the system quits the procedure. Since saving received phone numbers in the phone book belongs to the prior art, therefore it is not further described hereinafter.

If the received phone number does not contain a country code and an area code (step 102), then the country code and area code of the phone signal sending place is analyzed (step 103). The above analysis needs to refer to a country code table and an area code table (step 104). The country code table and the area code table can be provided by the telecommunications service provider. These tables can be obtained by sending out a request from the mobile phone to the service provider or by directly installing them in the mobile phone memory. When the system finds the country code and area code of the signal-sending place from the country code table and the area code table, they are added to the original phone number (step 105). Similarly, the system then prompts to the user to decide whether the phone number should be saved (step 106). If the user answers yes, then the phone number data are stored in the phone book (step 107); otherwise, the system quits the procedure.

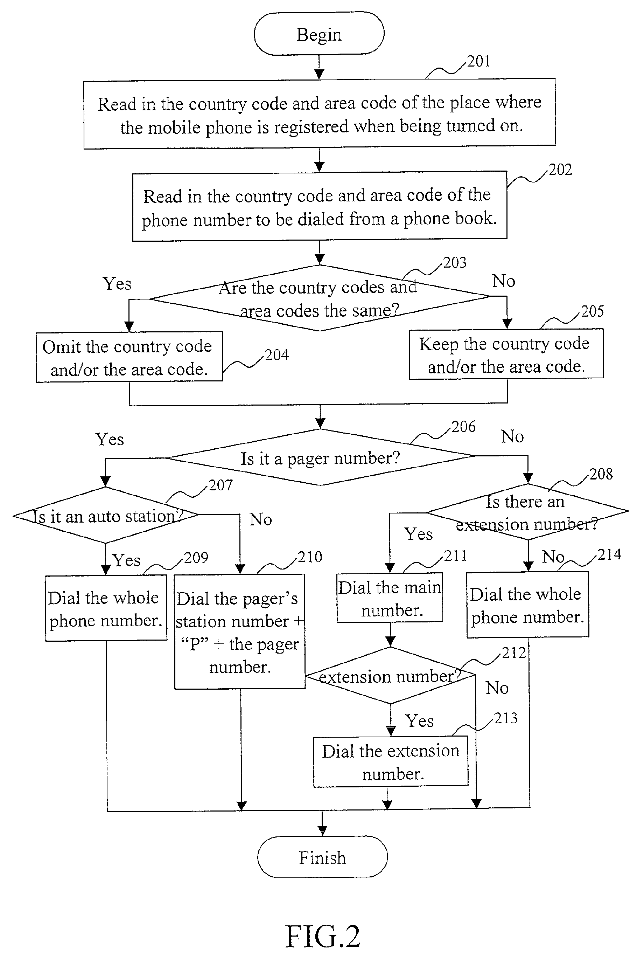

Since the disclosed system adds the country code and area code to the phone number received, therefore, the mobile phone of the present invention can directly make a judgment when calling out. With reference to FIG. 2, the system first reads in the local country code and area code of the place where the mobile phone is registered when being turned on (step 201). At the same time, the destination country code and area code of the phone number to be dialed are read from the phone book (step 202). The destination country code and area code and the local country code and area code are compared (step 203). If the destination country code is the same as the local country code, then the country code is omitted; similarly, if the destination area code is the same as the local area code, the area code is omitted (step 204). If the destination country code is different from the local country code, then both the destination country code and area code have to be kept; if the country codes are the same but the area codes are different, then only the area code needs to be kept (step 205). Afterwards, the system determines whether the phone number to be dialed is a pager number (step 206). If it is a pager number, then the system further determines whether the pager number is of an auto station form (step 207). If it is of an auto station form, the whole phone number can be directly used to call out (step 209). The phone number to be dialed may or may not contain the destination country code, depending upon the previous determination result in step 203. If the page number is not of an auto station form, that means it requires an operator to manually transfer the call. Therefore, the dialing number is modified into the original pager number preceded by the pager's station number and at least one "P". If the phone number is not a pager number (step 206), then the system determines whether there is an extension number in the phone number (step 208). If there is no extension number, the system directly dials the whole phone number (step 214). Similarly, the phone number may or may not contain the country code and area code, depending upon the previous determination result in step 203. If there is an extension number, the system first dials the main phone number, leaving out the extension (step 211). Afterwards, the system will determine whether it is asked to enter an extension (step 212). If an extension number is required, the system will dial the remaining extension number (step 213); otherwise, the procedure is finished.

### Effects of the Invention

The present invention discloses an intelligent dialing method that has the following advantages:
1. Since the user does not need to manually enter country codes, area codes, extension numbers, or pager numbers, the calling procedure becomes much simpler and is not likely to make mistakes.
2. Through the disclosed method, even the conventional mixed types of phone number dialing can also be made without manual input.
3. The present invention can implement automatic extension or pager number dialing.
4. The disclosed method can automatically add or remove country codes and/or area codes to avoid incorrect long distance calls.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A phone book intelligent dialing method used in a mobile phone, which comprises the steps of:
analyzing and storing the destination country code and area code of a phone number received by the mobile phone;
reading in the local country code and area code of the place where the mobile phone is registered when being turned on;
analyzing the data type of the phone number and compare the destination country code and area code with the local country code and area code; and
determining the dialing content for the mobile phone according to the data type and the comparison result.

2. The method of claim 1, wherein the destination country code and area code of the phone number are stored in a phone book of the mobile phone.

3. The method of claim 1, wherein the step of analyzing and storing the destination country code and area code of the phone number is performed at the same time when the mobile phone receives the phone number signal.

4. The method of claim 1, wherein the destination country code and area code of the phone number are obtained by referring to a country code table and an area code table provided by a telecommunications service provider.

5. The method of claim 1 further comprising the step of omitting the destination country code when the destination country code and the local country code are the same.

6. The method of claim 1 further comprising the step of omitting the destination country code and area code when the destination country code is the same as the local country code and the destination area code as the local area code.

7. The method of claim 1, wherein the data type of the phone number is selected from the group comprising the combines of a usual phone number with no extension number, a usual phone number with an extension number, and a pager number.

8. The method of claim 7, wherein the dialing content is simply the phone number when the data type of the phone number is a usual phone number with no extension number.

9. The method of claim 7, wherein when the data type of the phone number is a usual phone number with an extension number, the dialing content consists of the steps of:
dialing the main part of the phone number; and
dialing the extension part of the phone number.

10. The method of claim 7, when the data type of the phone number is a pager number, further comprising the step of determining whether the pager number is of an auto station form.

11. The method of claim 10, wherein the dialing content is simply the pager number when the pager is of the auto station form.

12. The method of claim 10, wherein when the pager number is not of the auto station form, the dialing content is the pager number preceded by the pager's station number and at least one "P".

13. The method of claim 12, wherein the added "P" means waiting a period of time.
